# EUROPÄISCHE PATENTSCHRIFT

(11) **EP 2 327 287 B1**
(45) Veröffentlichungstag und Bekanntmachung des Hinweises auf die Patenterteilung: **07.05.2014**
(21) Anmeldenummer: 10014991.3
(22) Anmeldetag: 25.11.2010
(51) Int. Cl.: A01C 5/06, A01C 7/18

(54) **Vorrichtung zum Ablegen von körnigem Saatgut sowie Sämaschine mit einer solchen Vorrichtung**
Device for depositing granular seeds and sowing machine with such a device
Dispositif destiné à déposer des semences sous forme de graines et semeuse dotée d'un tel dispositif

(30) Priorität: 25.11.2009 DE 102009044656; 26.01.2010 DE 102010000212
(43) Veröffentlichungstag der Anmeldung: 01.06.2011
(73) Patentinhaber: Alois Pöttinger Maschinenfabrik Ges.m.b.H., 4710 Grieskirchen (AT)
(72) Erfinder: Becker, Reinhard, 94544 Hofkirchen a.d. Donau (DE)
(74) Vertreter: Thoma, Michael

(56) Entgegenhaltungen:
- DE-A1- 3 824 061
- GB-A- 1 185 485
- US-A- 2 840 018

## Beschreibung

Die vorliegende Erfindung betrifft eine Vorrichtung zum Ablegen von körnigem Saatgut im oder auf dem Boden, mit wenigstens einem einen zentralen Saatgutbehälter mit einer Ablegeeinheit verbindenden Fallrohr, das an seinem unteren Ende eine Ablegeöffnung aufweist. Die Erfindung betrifft ferner eine Sämaschine mit einem zentralen Saatgutbehälter, an den über einen Verteiler mehrere Saatgutleitungen angeschlossen sind, die von dem genannten Verteiler zu Ablegeeinheiten führen und an ihren unteren Enden Abgabeöffnungen aufweisen.

Einzelkornsämaschinen lassen sich grundsätzlich in zwei Klassen einteilen:

Zum einen sind Einzelkornsämaschinen bekannt, bei denen die Saatkörner aus einem zentralen Saatgutspeicher kommend auch zentral vereinzelt und anschließend an die verschiedenen Säschare zum Ablegen geschickt und sodann in die Saatfurche abgelegt werden. Beispielsweise kann dem Saatgutspeicher ein Verteiler nachgeordnet sein, von dem aus eine Vielzahl von Saatgutleitungen abgehen. In dem Verteiler werden die Körner bereits vereinzelt in die Leitungen gegeben, über die die Saatkörner dann einzeln an die Säschare geführt werden. Solche zentral verteilenden Maschinen können Getreidesaat wie Weizen mit zufriedenstellendem Ergebnis ablegen, nicht jedoch Maissaat zufriedenstellend vereinzelt in die Saatfurche ablegen. Die Vereinzelung leidet systembedingt an Unregelmäßigkeiten, weil es in dem Beschickungssystem zwischen dem zentralen Saatgutspeicher und den Säscharen zu Abstandsänderungen zwischen den Saatkörnern kommt und diese dann gehäuft bzw. mit zu großem Lückenabstand an den Säscharen ankommen und entsprechend unregelmäßig und damit mangelhaft ausgebracht werden, was zwangsläufig einen schlechteren Ernteertrag nach sich zieht. Die genannten Abstandsänderungen ergeben sich hauptsächlich deshalb, weil die Saatkörner sich in ihrer natürlichen Form, in der Größe, im Gewicht und in der Oberfläche unterscheiden und daher mit einer unterschiedlichen Geschwindigkeit im Leitungssystem bewegt werden, so dass sich in den recht langen Saatgutleitungen ein Ziehharmonika-Effekt mit Brückenbildung nicht vermeiden lässt. Zum anderen sind mit derartigen Sämaschinen nur begrenzte Fahrgeschwindigkeiten möglich, da die Saatkörner nicht beliebig schnell durch die Saatgutleitungen gefördert werden können, da sie anderenfalls zu schnell auf den Boden fallen und unregelmäßig zu liegen kämen. Zwar kann die Fördergeschwindigkeit der Saatkörner in den langen Saatgutleitungen mittels eines Fördergebläses erhöht und damit die Förderzeiten verringert werden, dies führt allerdings zu einem zu schnellen und damit unregelmäßigen Ablegen der Körner. Unregelmäßigkeiten im Kornabstand lassen sich regelmäßig auch nicht dadurch eliminieren, dass in den Schlauch- bzw. Rohrleitungen mit Druckluft gearbeitet wird, um die Saatkörner mittels Druckluft zu den Säscharen zu fördern. Die Saatkörner kommen aufgrund der Unregelmäßigkeiten einerseits dicht hintereinander gereiht bei dem jeweiligen Säschar an oder es entstehen andererseits größere Lücken zwischen den einzelnen Saatkörnern. Dies hat zur Folge, dass in einer Saatfurche Saatkörner dicht gehäuft oder mit großen Abständen abgelegt werden. Hierdurch wird der begrenzt zur Verfügung stehende Boden nicht optimal genutzt und die Pflanzen wachsen nicht in der gewünschten idealen Art und Weise, weil die Nährstoff- und Lichtaufnahme aufgrund der Standenge ungünstig ist. Die moderne Landwirtschaft ist aber darauf ausgelegt, einen möglichst hohen Ertrag pro Hektar zu erzielen, was aber nur dann erreicht werden kann, wenn die Saatkörner in einem definierten, exakten Abstand in einer jeden Reihe abgelegt werden. In Abhängigkeit vom Sortentyp ist das Ziel, eine Saatstärke von 70.000 bis über 100.000 Korn zu erreichen.

Andererseits sind Einzelkornsämaschinen bekannt, bei denen die Saatkörner erst in den Säscharen vereinzelt werden und hierfür jedes Säschar über einen eigenen Saatgutbehälter verfügt, wie dies beispielsweise die Schrift DE 20 64 336 zeigt. Bei einem solchen System wird zwar ein fehleranfälliger Transportweg zwischen einem zentralen Saatgutspeicher und den Säscharen umgangen, allerdings wird dies mit mehreren Nachteilen erkauft. Zum einen muss der Maschinenbetreiber stets dafür sorgen, dass jeder einzelne Saatgutspeicher immer gefüllt ist, was mit einem zeitlichen Mehraufwand verbunden ist. Vor allen Dingen aber sind derartige Einzelkornsämaschinen mit sechs-, acht- oder mehrreihigen Säscharen deutlich aufwändiger konstruiert und in Folge der separaten Saatgutspeicher an jedem Säschar auch deutlich schwerer. Damit geht bisweilen eine so ungünstige Gewichtsverteilung für den Schlepper einher, dass hier beispielsweise mit einem Fronttankdüngerstreuer für einen Gewichtsausgleich des Schleppers gesorgt werden muss. Ferner stößt diese bekannte Vereinzelungstechnik an ihre Grenzen, da mit einem Zellenrad nach dem Stand der Technik derzeit pro Sekunde nur ca. 12 bis 20 Körner vereinzelt werden können.

Aus der Schrift US 2,840,018 ist eine Sämaschine bekannt, bei der ein Särohr an seinem unteren Ende eine Tasche besitzt, die durch einen Kniehebel verschließbar ist. Das Särohr, ist über eine Ventitsteuerung zyklisch anhebbar und absenkbar und über ein Gestänge mit besagtem Kniehebel verbunden, so dass sich durch das Anheben und Absenken des Särohrs die Tasche am unteren Ende des Särohrs zyklisch öffnet und die darin gespeicherten Saatgutkörner austreten können.

Der vorliegenden Erfindung liegt die Aufgabe zugrunde, eine verbesserte Einzelkornsämaschine sowie eine Vorrichtung zum Ablegen von körnigem Saatgut zu schaffen, die Nachteile des Standes der Technik vermeiden und Letzteren in vorteilhafter Weise weiterbilden. Vorzugsweise soll trotz Verwendung eines zentralen Saatgutspeichers bei hohen Fahrgeschwindigkeiten eine gleichmäßig beabstandete Körnerablage in der Saatfurche erreicht werden.

Erfindungsgemäß wird diese Aufgabe durch eine Vorrichtung nach Anspruch 1 sowie eine Sämaschine nach Anspruch 14 gelöst. Vorteilhafte Ausgestaltungen der Erfindung sind Gegenstand der Unteransprüche.

Es wird also vorgeschlagen, Saatkörner, die von einem zentralen Saatgutspeicher entnommen und bereits zentral vereinzelt wurden, vor der Ablage in die Erdfurche nochmals zu vereinzeln und präzise auf den Ablagezeitpunkt vorzubereiten. Hierzu ist an den stromabseitigen Enden der Saatgutleitungen eine Ablegevorrichtung vorgesehen, die die Saatkörner wieder auf einen exakt bestimmten zeitlichen bzw. räumlichen Abstand bringt, so dass die Saatkörner in einem definierten exakten Abstand im oder am Erdreich abgelegt werden können. Erfindungsgemäß umfasst die Ablegeeinheit im Bereich der Abgabeöffnung der Saatgutleitung wenigstens eine Sperrklinke zur Steuerung der Öffnungsweite des durch die Ablegeeinheit führenden Saatgutkanals, wobei die Sperrklinke derart beweglich gelagert ist, dass die Sperrklinke durch ein aus der Saatgutleitung kommendes Saatkorn in eine Öffnungsstellung bewegbar ist, in der das Saatkorn die Sperrklinke passieren kann. Mit Hilfe dieser zumindest einen Klinke oder Klappe werden die ankommenden Saatkörner am oder nach dem Ende der Saatgutleitung zunächst abgebremst und auf Abstand gebracht, bevor sie abgelegt werden. Hierdurch kann mit hohen Fördergeschwindigkeiten in den langen Saatgutleitungen gearbeitet werden, beispielsweise mit Druckluftunterstützung, um hohe Fahrgeschwindigkeiten der Sämaschine zu ermöglichen; dennoch wird durch das Abbremsen der Saatkörner mit Hilfe der Klinke bzw. Klappe ein sanftes Ablegen der Körner mit hoher Genauigkeit erreicht.

In bevorzugter Weiterbildung der Erfindung werden hierbei die Saatkörner mit Hilfe der zumindest einen Klinke bzw. Klappe zunächst sanft abgebremst und danach gegen eine antreibbare Förderbahn gedrückt, wodurch sie auf deren Fördergeschwindigkeit gebracht werden, um dann in der von der Förderbahn vorgegebenen Geschwindigkeit abgelegt zu werden. Vorteilhafterweise ist die genannte Förderbahn durch einen Antrieb mit variabler Antriebsgeschwindigkeit antreibbar, so dass durch Veränderung der Fördergeschwindigkeit der Förderbahn die zeitliche oder räumliche Beabstandung aufeinander folgender Saatkörner vergleichmäßigt werden kann. Wird beispielsweise ein nachfolgendes Saatkorn zu früh erfasst, d.h. sein Abstand zum vorauslaufenden Saatkorn ist zu klein, wird die Förderbahn verlangsamt, um den Abstand wieder zu vergrößern. Umgekehrt kann die Fördergeschwindigkeit der Förderbahn erhöht werden, wenn ein nachfolgendes Korn zu spät erfasst wird bzw. einen zu großen Abstand zum vorauslaufenden Korn hat.

In einer alternativen, vereinfachten Ausführungsform können die Saatkörner auch ohne Zuhilfenahme einer solchen Förderbahn nur mit Hilfe der zumindest einen Klinke bzw. Klappe abgebremst werden. Hierdurch kann zwar nicht die gleiche Präzision wie unter Zuhilfenahme der genannten Förderbahn erreicht werden, aber z.B. für die Aussaat von Saatkörnern für Silomais oder für Ganzpflanzen zur Biogasnutzung wäre eine solchermaßen vereinfachte Ablegeeinheit ausreichend. Um eine präzisere, genauere Abstandssteuerung nur durch die Klinke zu erreichen, kann der Klinke optional eine taktende Steuervorrichtung zugeordnet sein, die die Öffnungsbewegung der Klinke taktet, um hierdurch eine Abstandsvergleichmäßigung zu erreichen. Alternativ oder zusätzlich kann eine Vergleichmäßigung ohne antreibbare Förderbahn auch dadurch erreicht werden, dass zumindest zwei Sperrklinken kaskadenartig hintereinander angeordnet und derart miteinander gekoppelt bzw. ausgebildet werden, dass ein in der stromab liegenden Klinke noch festgehaltenes Saatkorn erst dann freigegeben wird, wenn ein weiteres Saatkorn in die stromauf liegende Sperrklinke einläuft, so dass die stromauf liegende Sperrklinke ein Stück weit aufgedrückt wird und diese Bewegung auf die stromab liegende Sperrklinke übertragen wird, so dass das dort festgehaltene Korn freigegeben wird.

In Weiterbildung der Erfindung kann die zumindest eine Sperrklinke vorzugsweise rinnenförmig ausgebildet sein, um das die Sperrklinke aufdrückende Saatkorn auf seinem Weg an der Sperrklinke vorbei zu führen und eine definierte Öffnungsweite vorzugeben.

Die Beweglichkeit der Sperrklinke zwischen Schließstellung und Öffnungsstellung kann grundsätzlich in verschiedener Weise erzielt werden. Beispielsweise könnten translatorisch aufdrückbare Sperrklinken oder Sperrklappen vorgesehen sein, die im Wesentlichen quer zur Längsrichtung des Saatgutkanals beweglich gelagert, beispielsweise verschieblich gelagert sein können. Alternativ könnten die Sperrklinken durch eine gelenkige Lagerung beispielsweise in Form einer Lenkerführung, beispielsweise in Form einer Parallelogrammlenkerführung beweglich gelagert sein, um die Bewegung zwischen Schließ- und Öffnungsstellung und zurück zu ermöglichen. In bevorzugter Weiterbildung der Erfindung jedoch ist die zumindest eine Sperrklinke um eine Schwenkachse schwenkbar gelagert, die sich quer zur Längsrichtung des Saatgutkanals erstreckt, insbesondere liegend ausgerichtet ist. Vorteilhafterweise ist die genannte Schwenkachse hierbei in einem stromaufwärtigen Endabschnitt der Sperrklinke angeordnet, so dass sich ein stromabseitiges Ende der Sperrklinke auf den Förderkanal zu bzw. von diesem weg bewegen kann, um die Öffnungsweite zu regulieren.

In Weiterbildung der Erfindung ist die zumindest eine Sperrklinke durch Vorspannmittel, beispielsweise in Form einer Federeinrichtung, elastisch in ihre Schließstellung vorgespannt und nur unter Überwindung der genannten Vorspannkraft der Vorspannmittel in ihre Öffnungsstellung verbringbar. Durch derartige Vorspannmittel wird das Öffnen der Sperrklinke definiert und präzise gesteuert, wodurch wiederum eine präzise Steuerung des Ablegevorgangs erreicht wird.

In Weiterbildung der Erfindung können in Auslaufrichtung des Saatguts aus der Saatgutleitung mehrere Sperrklinken aufeinander folgend angeordnet sein, so dass ein Saatkorn nacheinander die mehreren Sperrklinken durchläuft. Vorteilhafterweise sind die mehreren Sperrklinken jeweils um liegende Schwenkachsen schwenkbar gelagert und rinnenförmig ausgebildet, so dass sich die freien, von den Schwenkachsen beabstandeten Enden der Sperrklinken auf der jeweils folgenden Sperrklinke bzw. Rinne abstützen. In vorteilhafter Weiterbildung der Erfindung werden vier oder mehr, insbesondere sechs oder mehr Sperrklinken verwendet.

In Weiterbildung der Erfindung erfüllen die mehreren Sperrklinken unterschiedliche Funktionen, beispielsweise dadurch, dass sie unterschiedlich stark vorgespannt sind und/oder unterschiedlich weit von einer gegenüberliegenden Wandung des Saatgutkanals beabstandet sind. Insbesondere kann eine erste Sperrklinke eine abbremsende Funktion haben, beispielsweise dadurch, dass sie einen kleineren Öffnungsspalt bzw. eine kleinere Öffnungsweite für den Saatgutkanal definiert, so dass ein ankommendes Saatkorn abgebremst wird und die Sperrklinke entsprechend weit aufdrücken muss, um diese zu passieren. Eine weiter stromab angeordnete Sperrklinke kann in Weiterbildung der Erfindung eine Weiterleitungs- und/oder Beschleunigungsfunktion besitzen, beispielsweise dadurch, dass diese weiter stromab angeordnete Sperrklinke eine größere Öffnungsweite für den Saatgutkanal definiert, insbesondere derart, dass das Saatkorn auf der Sperrklinke entlangrutschen kann, ohne größer abgebremst zu werden. In Weiterbildung der Erfindung ist dann stromab eine weitere Sperrklinke angeordnet, die wiederum eine Abbremsfunktion erfüllt, beispielsweise dadurch, dass diese Sperrklinke wiederum eine kleinere Öffnungsweite definiert.

Ist in der vorgenannten Weise eine antreibbare Förderbahn vorgesehen, endet die Saatgutleitung mit ihrer Abgabeöffnung tangential an dieser Förderbahn, wobei die wenigstens eine Sperrklinke mit ihrem stromabseitigen Endabschnitt der Förderbahn gegenüberliegt, so dass der Körnerkanal von den gegenüberliegenden Flächen der Förderbahn und der Sperrklinke begrenzt wird. Das aus der Saatgutleitung herausfallende Saatkorn gerät hierdurch automatisch zwischen die Förderbahn und die Sperrklinke, so dass das Saatkorn sowohl mit der Sperrklinke als auch mit der Förderbahn in Eingriff gerät und hierdurch abgebremst wird.

Sind mehrere Sperrklinken in der vorgenannten Weise vorgesehen, sind die genannten Sperrklinken vorteilhafterweise hintereinander jeweils tangential an die Förderbahn angestellt bzw. dieser zugeordnet, um zwischen Förderbahn und Sperrklinke den genannten Saatgutkanal zu definieren.

Die genannte Förderbahn kann grundsätzlich verschieden ausgebildet sein, beispielsweise in Form eines Bandförderers. Alternativ oder zusätzlich kann die Förderbahn auch ein antreibbares Rad umfassen, dessen Außenumfang einen Teil des Saatgutkanals begrenzt. Insbesondere kann um das genannte Rad ein Riemen umlaufen, der an seiner Außenseite eine nutförmige Vertiefung aufweisen kann, um die Saatgutkörner zu führen.

Vorteilhafterweise sind einem solchen drehbaren Rad mehrere aufeinander folgende Sperrklinken zugeordnet derart, dass sich die Sperrklinken nacheinander tangential zu dem Rad erstrecken. In vorteilhafter Weiterbildung der Erfindung läuft das Rad um eine liegende Achse um, wobei eine in Auslaufrichtung erste Sperrklinke vorteilhafterweise vertikal oder nur leicht spitzwinklig zur Vertikalen geneigt angeordnet ist. Eine in Auslaufrichtung letzte Sperrklinke kann liegend, insbesondere etwa waagrecht angeordnet sein.

Wird in der vorgenannten Weise als Förderbahn ein um das genannte Rad umlaufender Riemen verwendet, kann der Antrieb zu der genannten Sperrklinkenanordnung versetzt angeordnet werden, wodurch eine insgesamt gerade im Bereich der Sperrklinken sehr schlanke Anordnung der Ablegeeinheit erreicht werden kann.

Der Antrieb der Förderbahn kann grundsätzlich verschieden ausgebildet sein, beispielsweise einen elektrischen Motor umfassen, der leicht hinsichtlich seiner Drehzahl steuerbar ist. Die hierfür vorgesehene Steuervorrichtung kann verschiedene Betriebsparameter berücksichtigen, um die Antriebsgeschwindigkeit entsprechend anzupassen. Beispielsweise kann die Antriebsgeschwindigkeit der Förderbahn an die Fahrgeschwindigkeit der Sämaschine angepasst werden derart, dass bei schnellerem Fahren die Förderbahngeschwindigkeit erhöht wird. Alternativ oder zusätzlich kann die Förderbahngeschwindigkeit und damit die Ablegegeschwindigkeit in Abhängigkeit des Saatguttyps oder der jeweiligen Bodenbeschaffenheit variiert werden.

Insbesondere kann die Steuervorrichtung alternativ oder zusätzlich die Antriebsgeschwindigkeit der Förderbahn in Abhängigkeit des Abstandes aufeinander folgender Saatgutkörner und/oder der Förderzeit eines Saatkorns durch die Saatgutleitung und/oder die Ablegeeinheit variieren. In Weiterbildung der Erfindung können Erfassungsmittel beispielsweise in Form von Lichtschranken vorgesehen sein, um beispielsweise die Zeit zu erfassen, die ein Saatkorn vom Verteiler am zentralen Saatgutspeicher bzw. dem Eingang der Saatgutleitung bis zum Ausgang der Saatgutleitung und/oder zum Ausgang der Ablegeeinheit benötigt. Wird hier eine zu lange Zeit erfasst, kann die Förderbahn beschleunigt werden, um den Abstand zum vorauslaufenden Korn zu verringern, während umgekehrt die Förderbahn verlangsamt werden kann, wenn ein Saatkorn zu schnell durch die Saatgutleitung gefallen ist.

In Weiterbildung der Erfindung kann die Steuereinheit für die Antriebsgeschwindigkeit der Förderbahn einen Synchronisierungsbaustein umfassen, mittels dessen die Ablagegeschwindigkeit bzw. deren Grundniveau, um das die Geschwindigkeit in der genannten Weise variiert werden kann, mit der Verteilgeschwindigkeit am Saatgutspeicher synchronisiert werden kann. Wird beispielsweise die Sämaschine schneller gefahren, wird die zentrale Verteilungsgeschwindigkeit des zentraler Verteilers am Saatgutspeicher ebenso erhöht und/oder mit der genannten Grundgeschwindigkeit der Förderbahn synchronisiert.

Durch das Abbremsen der aus der Saatgutleitung austretenden Saatkörnern können deutlich höhere Fahrgeschwindigkeiten gefahren werden, da trotz entsprechend höherer Fördergeschwindigkeiten in der Saatgutleitung dennoch ein kontrolliertes Ablegen erreicht wird. Um bei hohen Fahrgeschwindigkeiten die Saatkörner entsprechend schnell durch die oft recht langen Saatgutleitungen vom zentralen Saatgutspeicher zu den Ausbringeinheiten zu fördern, kann beispielsweise ein Fördergebläse Verwendung finden, das mit entsprechend hohem Druck die Saatkörner durch die Saatgutleitungen fördert. Ohne Abbremsen durch die genannte Klinke würden die Saatgutkörner viel zu schnell aus den Saatgutleitungen ausgebracht und unkontrolliert am Boden abgelegt werden. Zum anderen ist es möglich, den Säabstand auch bei unterschiedlichen Korngrößen zu standardisieren, indem durch den beschriebenen Mechanismus kleinere und größere Körner gleichermaßen beabstandet abgelegt werden.

Die Erfindung wird nachfolgend anhand bevorzugter Ausführungsbeispiele und zugehöriger Zeichnungen näher erläutert. In den Zeichnungen zeigen:
- Fig. 1:: eine schematische Seitenansicht einer Ablegeeinheit einer Sämaschine nach einer vorteilhaften Ausführung der Erfindung, bei der im Bereich der Austrittsöffnung der vom Saatgutspeicher her kommenden Saatgutleitung mehrere Sperrklinken angeordnet sind, denen eine Förderbahn in Form eines um ein Rad umlaufenden Riemens zugeordnet ist,
- Fig. 2:: eine vergrößerte, perspektivische Seitenansicht der Ablegeeinheit aus Fig. 1, die die tangentielle Anordnung der Saatgutleitung zu dem Rad und die diesem zugeordneten Sperrklinken zeigt,
- Fig. 3:: einen Längsschnitt durch die Ablegeeinheit aus den vorhergehenden Figuren,
- Fig. 4:: einen Schnitt durch die Ablegeeinheit entlang der Linie C-C in Fig. 3,
- Fig. 5:: eine schematische Seitenansicht einer Ablegeeinheit der Sämaschine nach einer weiteren, vereinfachten Ausführungsform, die auf eine der Sperrklinke zugeordnete antreibbare Förderbahn verzichtet,
- Fig. 6:: eine ausschnittsweise, vergrößerte Ansicht des unteren Endes des Fallsrohrs der Saatgutleitung aus Fig. 5, und
- Fig. 7:: eine schematische Seitenansicht der gesamten Sämaschine.

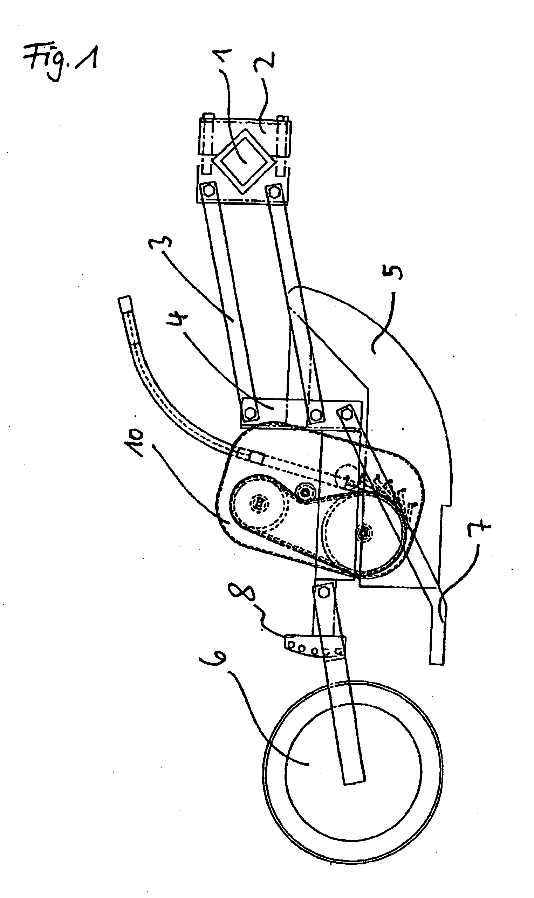

Im ersten Ausführungsbeispiel nach den Figuren 1 bis 4 ist an einem Tragbalken 1 eine Halterung 2 für eine Parallelführung 3 befestigt, beispielsweise verschraubt. Die gegenüberliegende Seite der Parallelführung 3 ist von dem Rahmen 4 der Sämaschine 120 gebildet, an dem die Säschare 5, die Ablegeeinheit 10, ein Zustreicher 7 und eine Führungs- und Saatandruckrolle 6 befestigt sind. Die Führungs- und Saatandruckrolle 6 ist in an sich bekannter Weise schwenkbar ausgebildet und mittels einer Tiefeneinstellung 8 höhenverstellbar am Rahmen 4 angeordnet.

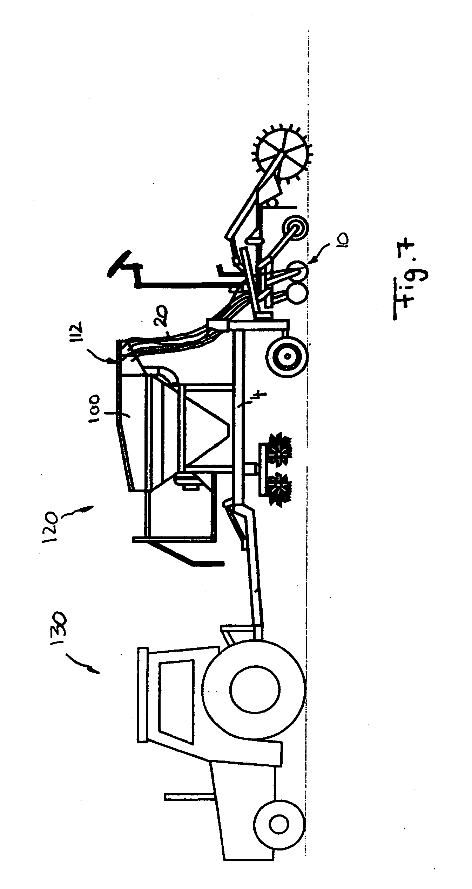

In beispielhafter Darstellung zeigt Fig. 7 die gesamte Sämaschine 120, die beispielsweise von einem Schlepper 130 gezogen werden kann. Auf dem Rahmen 4 der Sämaschine 120 ist ein Saatgutspeicher 100 angeordnet, dem ein zentraler Verteiler 112 zugeordnet ist, beispielsweise in Form eines oder mehrerer Zellenräder, die zu einem Zellenradkörper parallel zusammengefasst sein können, um gleichzeitig mehrere Saatkörner aus dem zentralen Saatgutbehälter entnehmen und vereinzeln zu können. Der genannte Verteiler 112 verteilt die vereinzelten Saatkörner auf eine Vielzahl von Saatgutleitungen 20, die den zentralen Saatgutspeicher 100 mit einer Vielzahl von Ablegeeinheiten 10 verbindet, die quer zur Fahrtrichtung nebeneinander in dem gewünschten Furchenabstand angeordnet sind. Um die Saatgutkörner durch die genannten Saatgutleitungen 20 zu fördern, kann die Schwerkraft genutzt, aber auch ein Fördergebläse 113 vorgesehen sein, um das Saatgut mit Druckluft durch die Saatgutleitungen 20 zu fördern.

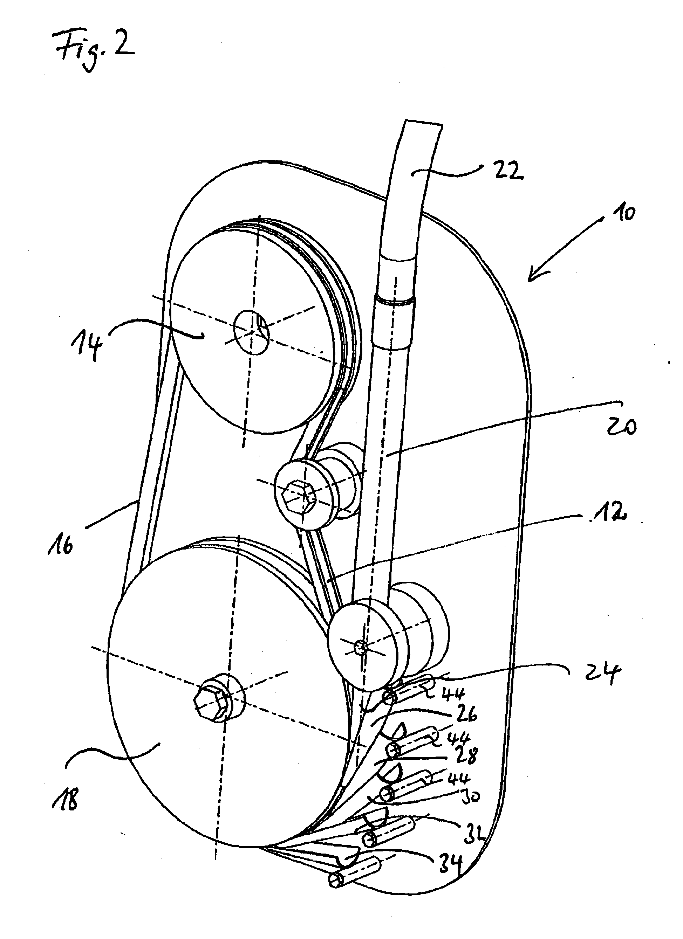

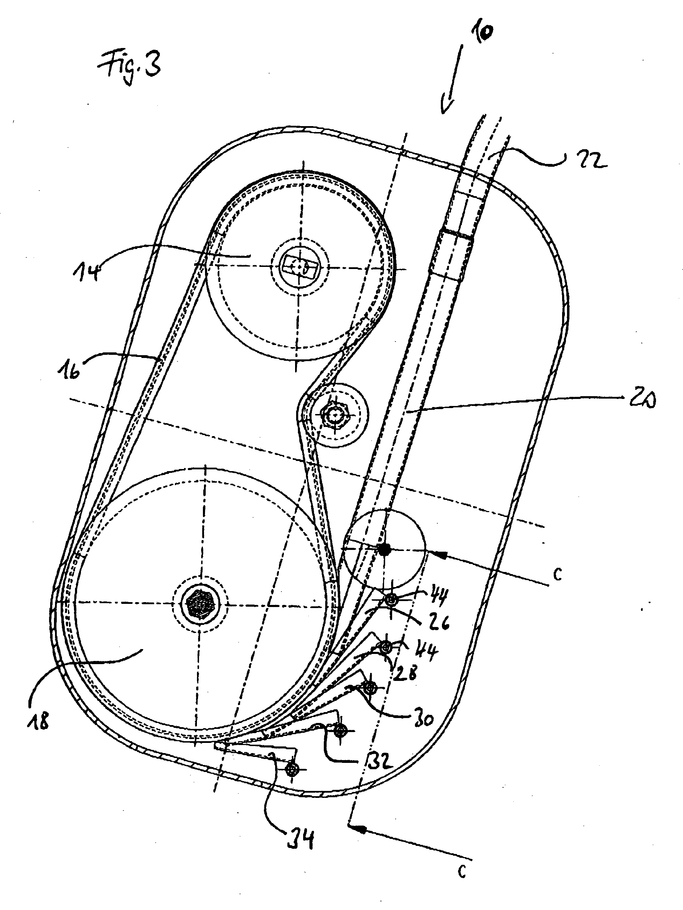

Die Figuren 2 und 3 zeigen in vergrößerter Darstellung eine Ablegeeinheit 10. Die Saatgutleitung 20 ist an ihrem stromabseitigen Ende als Fallrohr ausgebildet, das zur Vertikalen nur leicht geneigt nach unten in die Ablegeeinheit 10 führt.

Die über die Saatgutleitung 20 vom zentralen Saatgutspeicher her kommenden Körner verändern, wie schon erwähnt, auf diesem Weg durch die Saatgutleitung 20 regelmäßig ihren Abstand, weil sie aufgrund ihrer Natur unterschiedlich geformt, unterschiedlich groß und unterschiedlich schwer sind. Zwar bietet die Leitung 20 ausreichend Raum, so dass ein reibungsloser Transport gewährleistet und ein potentieller Rückstau abgefangen bzw. ein Verstopfen vermieden werden kann. Es bleibt jedoch das Problem, dass die Saatkörner regelmäßig dicht hintereinander gereiht bzw. mit größeren Lücken ankommen und damit unregelmäßig die Ablegeeinheit 10 erreichen. Zudem kommen die Saatgutkörner bei hohen Fahrgeschwindigkeit und entsprechend hoher Druckluftbeaufschlagung in der Saatgutleitung 20 viel zu schnell am Austrittsende der Saatgutleitung 20 an.

Die Ablegeeinheit 10 umfasst im Beispiel der Figuren 1 bis 4 einen nicht näher dargestellten elektrischen Motor, der über eine Riemenscheibe 14 einen Riemen 16 antreibt, der über eine weitere Riemenscheibe bzw. ein Rad 18 läuft, sowie ferner mehrere Klappen oder Sperrklinken 16-34, die die aus dem zentralen Saatgutspeicher 100 ankommenden Saatgutkörner führen, abbremsen und vereinzeln. Der Riemen 16 kann in vorteilhafter Weise zur Aufnahme und zum Weitertransport der Saatkörner auf der den Körnern zugewandten Seite eine Nut 12 mit einer Tiefe umfassen, die vorteilhafterweise in etwa der halben Größe eines Saatkorns entspricht. Der genannte Motor treibt in Abhängigkeit von der Fahrgeschwindigkeit des Schleppers 130 den Riemen 16 schneller oder langsamer an und wird hinsichtlich seiner Antriebsgeschwindigkeit von einer nicht näher dargestellten elektronischen Steuer- bzw. Regeleinrichtung gesteuert bzw. geregelt.

Am Ende des Fallrohrs der Saatgutleitung 20 bremst eine erste Klinke 24 das ankommende Saatkorn in der Weise sanft ab, dass der Aufprall des Saatkorns durch eine Gegenkraft, z.B. durch eine auf die Klinke 24 wirkenden Federeinrichtung, an der ersten Klinke 24 nachgebend abgefangen und dann sanft mit einem leichten Druck gegen den Riemen 16 gedrückt wird, so dass das Korn in der Geschwindigkeit zwar abgebremst, aber in seiner Fallgeschwindigkeit noch nicht auf die Geschwindigkeit des Riemens 16 herunter abgebremst wird. Hierfür ist die Klinke 24 leichgängig gelagert, so dass sie mehr oder minder sofort bzw. unverzüglich den weiteren Weg freigibt, so dass das Saatkorn mit seiner Fallgeschwindigkeit mit einem gewissen Schlupf gegenüber dem Riemen 16 an der ersten Klinke 24 vorbei auf die zweite Klinke 26 trifft. Diese schließlich bringt das Korn auf die Umlaufgeschwindigkeit des Riemens 16. Die zweite Klinke 26 nimmt dabei einen Abstand zum Riemen 16 ein, der durch die Größe des Saatkorns bestimmt ist. Die Klinken 24 und 26 dienen somit der Vorsortierung der Saatkörner.

Die dritte und vierte Klinke 28 und 30 haben nur einer führende, d.h. richtungs- bzw. wegweisende, aber keine bremsende Funktion. Die Klinken 28 und 30 sind insbesondere derart angebracht, dass sie einen größeren Abstand zum Riemen 16 einnehmen, der sogar größer ist, als es die Korngröße notwendig macht. Das Saatkorn beschleunigt daher aufgrund der Gravitationskraft wieder und wird durch die Klinken 28 und 30 nur geführt. Die genannten Klinken 28 und 30 sind hierbei vorteilhafterweise zur Vermeidung einer potentiellen Staugefahr leichtgängig gelagert. Regelmäßig sind diese beiden Klinken nicht gefedert, sondern liegen durch ihr Eigengewicht übereinander bzw. auf einer fünften Klinke 32. Aufgrund der Führungsfunktion wäre als Alternative hier auch eine Rinne bzw. ein Führungsschlauch denkbar. In der Praxis hat sich eine solche Lösung allerdings als wenig flexibel erwiesen. In Fig. 3 ist der größere Abstand der dritten und vierten Klinke 28 und 30 zum Riemen 16 erkennbar.

Das Saatkorn trifft schließlich auf die fünfte und vorletzte Klinke 32, die zum Riemen 16 hin ebenfalls in einem spitzen Winkel angeordnet ist. Dabei ist der Abstand der fünften Klinke 32 zum Riemen kleiner als die Saatkorngröße. Dies hat zur Folge, dass durch die fünfte Klinke 32 das Saatkorn nun wieder abgebremst und erneut auf die Geschwindigkeit des Riemens 16 gebracht wird. Das Saatkorn hat damit die durch die Steuerung vorgegebene Geschwindigkeit der Förderbahn 110 bzw. des Riemens 16 erreicht. Auf die fünfte Klinke 32 folgt eine weitere und letzte, d.h. im gezeichneten Ausführungsbeispiel sechste Klinke 34, die ungefähr waagerecht angeordnet ist und mit einem geringeren Abstand zum Riemen 16 einen leichteren Druck auf das Saatkorn in Richtung Riemen 16 ausübt. Diese sechste Klinke 34 ist aber ebenfalls leichtgängig gelagert bzw. nur geringfügig elastisch vorgespannt, so dass das Saatkorn beim Erreichen derselben mehr oder minder unmittelbar freigegeben wird. Diese sechste Klinke 34 kann vorzugsweise auch so angeordnet sein, dass sie über die Waagerechte hinaus etwas nach hinten kippt, so dass sie sich dem Saatkorn 40 in den Weg stellt. Hierdurch wird verhindert, dass ein kleineres Saatkorn, das einem größeren Saatkorn vorauseilt, zu schnell und nicht im vorgesehenen Abstand fällt. Dies wird durch die letzte Klinke 34 vermieden, die das kleinere Saatkorn noch festhält und eine schnellere Freigabe verhindert.

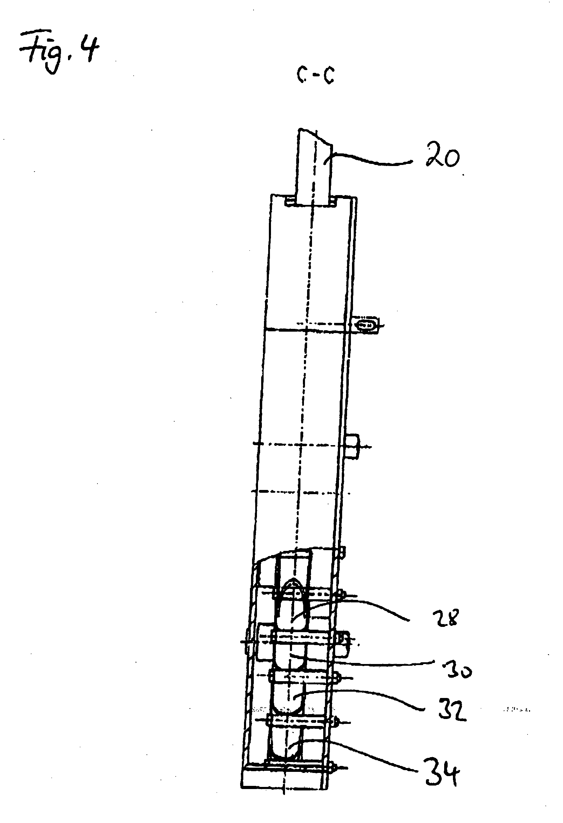

Die Fig. 4 zeigt eine Schnittansicht der Ablegeeinheit 10 aus der Fig. 3 in der Ebene C-C. Die Darstellung in Fig. 4 ist teilweise geschnitten, so dass die einzelnen Klinken 28, 30, 32 und 34 erkennbar sind. Aus der Fig. 4 ist weiter erkennbar, dass die erfindungsgemäße Ablegeeinheit äußerst Platz sparend konstruiert ist.

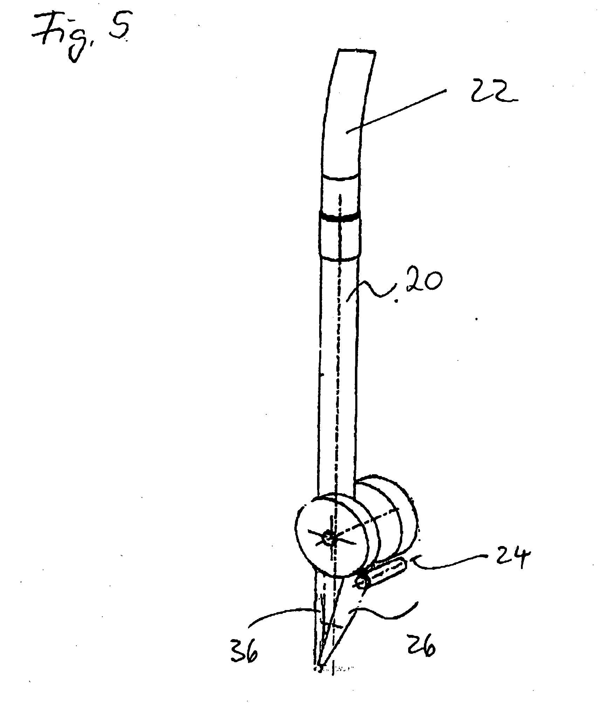

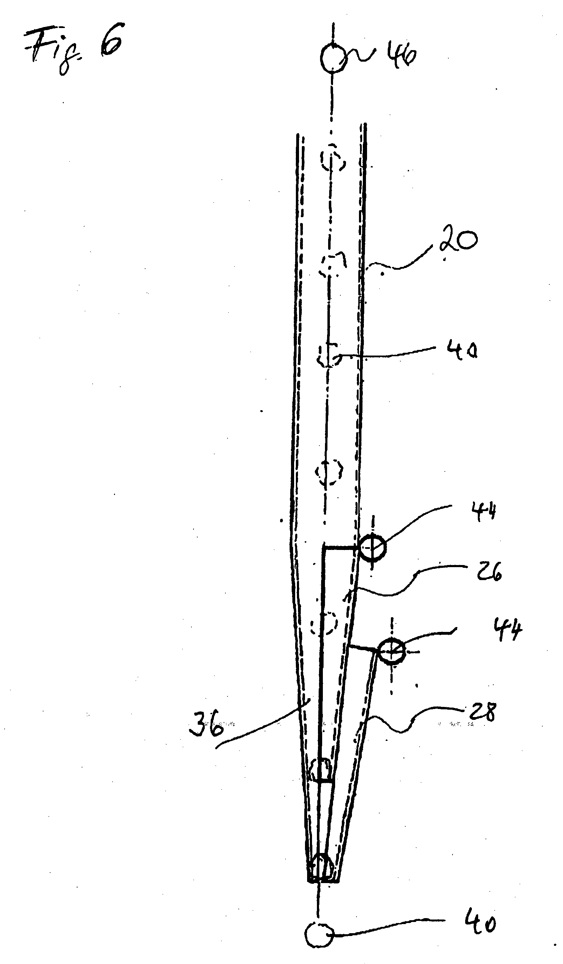

Die Figuren 5 und 6 zeigen eine vereinfachte Ausführungsvariante der Ablegeeinheit 10, die auf den Motor getriebenen Riemen 16 sowie das Rad 18 verzichtet. Ähnlich der Ausführung nach den Figuren 1 bis 4 ist auch hier das untere Ende 36 des Fallrohrs der Saatgutleitung 20 trichterförmig ausgebildet. Im Beispiel der Fig. 5 ist hierbei nur eine um ihre Schwenkachse 44 schwenkbare Sperrklinke 26 vorgesehen, während in der Variante der Fig. 6 zwei Sperrklinken 26 und 28 aufeinander folgend angeordnet sind.

In beiden Fällen bildet, wie aus Fig. 6 ersichtlich, die Sperrklinke 26 eine Seite des trichterförmigen Endes 36 des Fallrohrs der Saatgutleitung 20. Beim Durchfallen des Saatkorns 40 schwenkt dieses die Sperrklinke 26 um ihre Schwenkachse 44 in die Öffnungsstellung. Die Sperrklinken 26 und 28 sind federnd gelagert und werden durch die kinetische Energie des durch das Fallrohr 20 zugeführten Saatkorns 40 geöffnet und geben so das Saatkorn frei. Hierdurch wird die Fallgeschwindigkeit der Saatkörner erheblich reduziert, so dass die Gefahr, dass diese aus der Erdfurche springen, reduziert und der Ablagezeitpunkt optimiert wird.

In einer möglichen weiteren Ausführungsform, in der die Sperrklinken aufeinander abgestimmt sind, könnte die zweite Klinke 28 das Saatkorn noch so lange festhalten, bis durch ein nachfolgendes Saatkorn die erste Klinke 26 gegen die Federkraft die zweite Klinke 28 in Öffnungsstellung bringt.

## Patentansprüche

1. Vorrichtung zum Ablegen von Körnern, insbesondere Saat- oder Düngerkörnern, im oder am Erdboden, mit wenigstens einer einen zentralen Saatgutspeicher (100) mit einer Ablegeeinheit (10) verbindenden, insbesondere schlauchförmigen, Saatgutleitung (20), die an ihrem unteren Ende eine Abgabeöffnung aufweist, **dadurch gekennzeichnet, dass** die Ablegeeinheit (10) im Bereich der Abgabeöffnung der Saatgutleitung (20) wenigstens eine Sperrklinke (26) zur Steuerung der Öffnungsweite des durch die Ablegeeinheit führenden Saatgutkanals aufweist, wobei die Sperrklinke (26) derart beweglich gelagert ist, dass die Sperrklinke (26) durch ein aus der Saatgutleitung (20) kommendes Saatkorn (40) in eine Öffnungsstellung bewegbar ist, in der das Saatkorn (40) die Sperrklinke (26) passieren kann.

2. Vorrichtung nach dem vorhergehenden Anspruch, wobei die Sperrklinke (26) eine Seitenwand des vorzugsweise trichterförmigen unteren Endes (36) der Saatgutleitung (20) bildet.

3. Vorrichtung nach einem der vorhergehenden Ansprüche, wobei die vorzugsweise rinnenförmig ausgebildete Sperrklinke (26) durch Vorspannmittel elastisch in ihre Schließstellung vorgespannt ist und gegen eine Vorspannkraft der Vorspannmittel in ihre Öffnungsstellung bewegbar ist, wobei vorzugsweise die zumindest eine Sperrklinke (26) um eine sich quer zur Förderrichtung durch den Saatgutkanal erstreckende Schwenkachse (44) schwenkbar gelagert ist, so dass ein von der Schwenkachse (44) beabstandetes freies Ende der Sperrklinke in den Saatgutkanal hinein/auf den Saatgutkanal zu sowie aus dem Saatgutkanal heraus/von dem Saatgutkanal weg schwenkbar ist.

4. Vorrichtung nach einem der vorhergehenden Ansprüche, wobei in Auslaufrichtung des Saatguts aus der Saatgutleitung (20) mehrere Sperrklinken (24, 26, 28, 30, 32, 34) aufeinander folgend angeordnet sind und von einem Saatkorn nacheinander durchlaufen werden.

5. Vorrichtung nach dem vorhergehenden Anspruch, wobei die Sperrklinken (24, 26, 28, 30, 32, 34) aus um liegende Schwenkachsen (44) schwenkbaren Rinnen bestehen, deren freie Enden sich auf der jeweils folgenden Rinne abstützen.

6. Vorrichtung nach einem der beiden vorhergehenden Ansprüche, wobei zumindest zwei Sperrklinken (26, 28) kaskadenartig hintereinander angeordnet sind und derart miteinander gekoppelt und/oder ausgebildet und/oder durch Vorspannmittel vorgespannt sind, dass sich die stromab liegende Sperrklinke (28) erst dann vollständig in die Öffnungsstellung bewegt, wenn die stromauf liegende Sperrklinke (26) durch ein einlaufendes Saatkorn ein Stück weit aufgedrückt wird, so dass ein in der stromab liegenden Sperrklinke festgehaltenes Saatkorn erst dann freigegeben wird, wenn ein nachfotgendes Saatkorn in die stromauf liegende Sperrklinke (26) einläuft.

7. Vorrichtung nach einem der vorhergehenden Ansprüche, wobei die Ablegeeinheit (10) eine antreibbare Förderbahn (110) aufweist, an der die Saatgutleitung (20) mit ihrer Abgabeöffnung tangential endet, wobei die wenigstens eine Sperrklinke mit ihrem stromabseitigen Endabschnitt der Förderbahn (110) gegenüberliegt, so dass der Körnerkanal von den gegenüberliegenden Flächen der Förderbahn (110) und der Sperrklinke (26) begrenzt wird.

8. Vorrichtung nach dem vorhergehenden Anspruch, wobei die Förderbahn (110) ein drehbares Rad (18) umfasst und mehrere aufeinander folgende Sperrklinken (26, 28, 30, 32, 34) tangential zu dem Rad (18) angeordnet sind, vorzugsweise derart, dass eine in Auslaufrichtung erste Sperrklinke (26) vertikal oder nur leicht spitzwinklig zur Vertikalen geneigt angeordnet ist und/oder eine in Auslaufrichtung letzte Sperrklinke (34) liegend, insbesondere waagrecht, angeordnet ist.

9. Vorrichtung nach dem vorhergehenden Anspruch, wobei das Rad (18) Teil eines Riementriebs mit einem Riemen (16) ist, der um das genannte Rad (18) umläuft und auf seiner nach außen weisenden Seite eine rinnenförmige Nut (12) aufweist, der die Sperrklinken (26, 28, 30, 32, 34) zugewandt sind.

10. Vorrichtung nach einem der vorhergehenden Ansprüche, wobei mehrere Sperrklinken, die unterschiedliche Öffnungsweiten des Ablegekanals definieren, vorgesehen sind, wobei auf eine Sperrklinke (26), die eine kleinere Öffnungsweite definiert, zumindest eine Sperrklinke (28, 30) folgt, die eine größere Öffnungsweite definiert, wobei vorzugsweise auf die genannte zumindest eine Sperrklinke mit der größeren Öffnungsweite wieder zumindest eine Sperrklinke (32) folgt, die eine kleinere Öffnungsweite definiert.

11. Vorrichtung nach dem vorhergehenden Anspruch, wobei die kleinere Öffnungsweite derart bemessen ist, dass die jeweilige Sperrklinke (26; 32) ein Saatkorn gegen die Förderbahn (110) drückt, und die größere Öffnungsweite derart bemessen ist, dass ein Saatkorn ohne Kontakt zur Förderbahn (110) auf der Sperrklinke entlangrutschen kann.

12. Vorrichtung nach einem der vorhergehenden Ansprüche, wobei die Förderbahn (110) durch einen Antrieb mit variabler Antriebsgeschwindigkeit antreibbar ist und eine Steuervorrichtung zur Steuerung des Antriebs in Abhängigkeit zumindest eines Betriebsparameters aus der Gruppe umfassend Fahrgeschwindigkeit, Saatguttyp, Bodenbeschaffenheit, Körnerabstand und Förderzeit des Saatguts durch die Saatgutleitung (20) vorgesehen ist.

13. Vorrichtung nach dem vorhergehenden Anspruch, wobei Erfassungsmittel (111), vorzugsweise umfassend Lichtschranken am Eintritt der Saatgutleitung (20) und am Austritt der Ablegeeinheit (109), zur Erfassung der Förderzeit eines jeweiligen Saatkorns durch die Saatgutleitung (20) und die Ablegeeinheit (109) vorgesehen sind und die Steuervorrichtung einen Regler zur Regelung der Antriebsgeschwindigkeit der Förderbahn (110) in Abhängigkeit der erfassten Förderzeit aufweist.

14. Sämaschine, insbesondere Einzelkornsämaschine, mit einem zentralen Saatgutspeicher (100), an den über einen Verteiler (112) eine Vielzahl von Saatgutleitungen (20) angeschlossen sind, die den zentralen Saatgutspeicher (100) mit einer Vielzahl von Ablegeeinheiten (10) verbinden, **gekennzeichnet durch** eine Vorrichtung zum Ablegen von Saatkörnern nach einem der vorhergehenden Ansprüche.

15. Sämaschine nach dem vorhergehenden Anspruch, wobei ein Fördergebläse zur Förderung des Saatguts mit Druckluft durch die Saatgutleitungen (20) vorgesehen ist.

## Claims

1. A device for depositing grains, in particular seed or fertilizer grains, in or on the ground, with at least one, in particular tubular, seed line (20) connecting a central seed store (100) with a deposition unit (10), which at its lower end includes a discharge opening, **characterized in that** in the region of the deposition opening of the seed line (20) the deposition unit (10) includes at least one locking pawl (26) for controlling the opening width of the seed channel leading through the deposition unit, wherein the locking pawl (26) is movably mounted such that by a seed grain (40) coming from the seed line (20) the locking pawl (26) is movable into an open position, in which the seed grain (40) can pass the locking pawl (26).

2. The device according to the preceding claim, wherein the locking pawl (26) forms a side wall of the preferably funnel-shaped lower end (36) of the seed line (20).

3. The device according to any of the preceding claims, wherein the preferably chute-like locking pawl (26) is elastically biased into its closed position by biasing means and is movable into its open position against a biasing force of the biasing means, wherein preferably the at least one locking pawl (26) is pivotally mounted about a swivel axis (44) extending through the seed channel transversely to the conveying direction, so that a free end of the locking pawl spaced from the swivel axis (44) can be pivoted into the seed channel, towards the seed channel and out of the seed channel or away from the seed channel.

4. The device according to any of the preceding claims, wherein in outflow direction of the seeds from the seed line (20) several locking pawls (24, 26, 28, 30, 32, 34) are arranged in succession and are passed-through by a seed grain one after the other.

5. The device according to the preceding claim, wherein the locking pawls (24, 26, 28, 30, 32, 34) consist of chutes pivotable about horizontal swivel axes (44), whose free ends support on the respectively following chute.

6. The device according to any of the two preceding claims, wherein at least two locking pawls (26, 28) are arranged one behind the other in a cascade-like manner and are coupled with each other and/or formed and/or biased by biasing means such that the downstream locking pawl (28) only moves completely into the open position when the upstream locking pawl (26) is pressed open to some extent by an entering seed grain, so that a seed grain retained in the downstream locking pawl only is released when a succeeding seed grain enters into the upstream locking pawl (26).

7. The device according to any of the preceding claims, wherein the deposition unit (10) includes a drivable conveyor track (110) at which the seed line (20) tangentially ends with its discharge opening, wherein the at least one locking pawl faces the conveyor track (110) with its downstream end portion, so that the grain channel is defined by the opposed surfaces of the conveyor track (110) and the locking pawl (26).

8. The device according to the preceding claim, wherein the conveyor track (110) comprises a rotatable wheel (18) and several successive locking pawls (26, 28, 30, 32, 34) are arranged tangentially to the wheel (18), preferably such that a first locking pawl (26) in outflow direction is arranged vertically or inclined at an only slight acute angle to the vertical and/or a last locking pawl (34) in outflow direction is arranged in a lying manner, in particular horizontally.

9. The device according to the preceding claim, wherein the wheel (18) is part of a belt drive with a belt (16) which extends around said wheel (18) and on its side pointing to the outside includes a chute-like groove (12) faced by the locking pawls (26, 28, 30, 32, 34).

10. The device according to any of the preceding claims, wherein several locking pawls are provided, which define different opening widths of the deposition channel, wherein a locking pawl (26) which defines a smaller opening width is followed by at least one locking pawl (28, 30) which defines a greater opening width, wherein preferably said at least one locking pawl with the greater opening width again is followed by at least one locking pawl (32) which defines a smaller opening width.

11. The device according to the preceding claim, wherein the smaller opening width is dimensioned such that the respective locking pawl (26; 32) presses a seed grain against the conveyor track (110) and the greater opening width is dimensioned such that a seed grain can slip along the locking pawl without contact to the conveyor track (110).

12. The device according to any of the preceding claims, wherein the conveyor track (110) can be driven by a drive with variable driving speed and a control device is provided for controlling the drive in dependence on at least one operating parameter from the group comprising traveling speed, seed type, soil condition, grain distance and conveying time of the seeds through the seed line (20).

13. The device according to the preceding claim, wherein detection means (111), preferably comprising light barriers at the entry of the seed line (20) and at the exit of the deposition unit (109), are provided for detecting the conveying time of a respective seed grain through the seed line (20) and the deposition unit (109), and the control device includes a regulator for regulating the driving speed of the conveyor track (110) in dependence on the detected conveying time.

14. A sowing machine, in particular single grain sowing machine, with a central seed store (100) to which a plurality of seed lines (20) are connected via a distributor (112), which seed lines connect the central seed store (100) with a plurality of deposition units (10), **characterized by** a device for depositing seed grains according to any of the preceding claims.

15. The sowing machine according to the preceding claim, wherein a conveying blower is provided for conveying the seeds with compressed air through the seed lines (20).

## Revendications

1. Dispositif destiné à déposer des graines, en particulier des graines de semis ou d'engrais, dans ou sur le sol, comportant au moins un tuyau pour graines (20), en particulier en forme de tuyau flexible, qui relie un réservoir de graines (100) à une unité de dépose (10) et qui comporte une ouverture de distribution au niveau de son extrémité inférieure, **caractérisé en ce que** l'unité de dépose (10) comporte, dans la zone de l'ouverture de distribution du tuyau pour graines (20), au moins un cliquet d'arrêt (26) pour commander la largeur d'ouverture du conduit des graines menant à travers l'unité de dépose, ledit cliquet d'arrêt (26) étant monté mobile, de telle sorte que le cliquet d'arrêt (26) peut être déplacé par une graine de semis (40), sortant du tuyau pour graines (20), dans une position d'ouverture dans laquelle la graine de semis (40) peut franchir le cliquet d'arrêt (26).

2. Procédé selon la revendication précédente, dans lequel le cliquet d'arrêt (26) forme une paroi latérale de l'extrémité inférieure (36), de préférence de forme conique, du tuyau pour graines (20).

3. Procédé selon l'une quelconque des revendications précédentes, dans lequel le cliquet d'arrêt (26), réalisé de préférence sous forme de goulotte, est précontraint élastiquement dans sa position de fermeture par des moyens de précontrainte et peut être déplacé dans sa position d'ouverture à l'encontre de la force de précontrainte des moyens de précontrainte, ledit au moins un cliquet d'arrêt (26) étant monté, de préférence, de manière à pouvoir pivoter autour d'un axe de pivotement (44) s'étendant transversalement à la direction de transport à travers le conduit des graines, de telle sorte qu'une extrémité libre du cliquet d'arrêt, située à distance de l'axe de pivotement (44), peut pivoter à l'intérieur/vers le conduit des graines, ainsi que hors du conduit des graines ou en s'écartant du conduit des graines.

4. Procédé selon l'une quelconque des revendications précédentes, dans lequel plusieurs cliquets d'arrêt (24, 26, 28, 30, 32, 34) sont disposés les uns à la suite des autres dans la direction d'éjection des graines hors du tuyau pour graines (20) et sont traversés les uns après les autres par une graine de semis.

5. Procédé selon l'une quelconque des revendications précédentes, dans lequel les cliquets d'arrêt (24, 26, 28, 30, 32, 34) sont formés par des goulottes, qui sont aptes à pivoter autour d'axes de pivotement (44) horizontaux et dont les extrémités prennent appui sur la goulotte respectivement suivante.

6. Procédé selon l'une des deux revendications précédentes, dans lequel au moins deux cliquets d'arrêt (26, 28) sont disposés l'un derrière l'autre en forme de cascade et sont couplés l'un à l'autre et/ou réalisés et/ou précontraints par des moyens de précontrainte, de telle sorte que le cliquet d'arrêt (28) situé en aval est déplacé complètement dans la position d'ouverture uniquement lorsque le cliquet d'arrêt (26) situé en amont a été ouvert sur une partie par la graine de semis entrante, de telle sorte qu'une graine de semis, retenue dans le cliquet d'arrêt en aval sera libérée uniquement lorsqu'une graine de semis suivante entre dans le cliquet d'arrêt (26) situé en amont.

7. Procédé selon l'une quelconque des revendications précédentes, dans lequel l'unité de dépose (10) comporte une voie de transport (110) actionnable, au niveau de laquelle le tuyau pour graines (20) se termine tangentiellement avec son ouverture de distribution, ledit au moins un cliquet d'arrêt étant situé avec sa zone d'extrémité aval en face de la voie de transport (110), de telle sorte que le conduit des graines est délimité par les surfaces opposées de la voie de transport (110) et du cliquet d'arrêt (26).

8. Procédé selon l'une quelconque des revendications précédentes, dans lequel la voie de transport (110) comporte une roue (18) rotative, et plusieurs cliquets d'arrêt (24, 26, 28, 30, 32, 34) se succédant sont disposés tangentiellement à ladite roue (18), de préférence de telle sorte qu'un premier, par référence à la direction d'éjection, cliquet d'arrêt (26) est disposé verticalement ou seulement faiblement incliné en formant un angle aigu avec la verticale, et/ou un dernier, par référence à la direction d'éjection, cliquet d'arrêt (34) est disposé en particulier horizontalement.

9. Procédé selon l'une quelconque des revendications précédentes, dans lequel la roue (18) est une partie d'un système d'entraînement à courroie avec une courroie (16) qui tourne autour de ladite roue (18) et comporte, sur sa face orientée vers l'extérieur, une rainure (12) en forme de rigole vers laquelle sont orientés les cliquets d'arrêt (24, 26, 28, 30, 32, 34).

10. Procédé selon l'une quelconque des revendications précédentes, dans lequel sont prévus plusieurs cliquets d'arrêt, qui définissent les différentes largeurs d'ouverture du conduit de dépose, un cliquet d'arrêt (26), qui définit une plus petite largeur d'ouverture, étant suivi par au moins un cliquet d'arrêt (28, 30), qui définit une plus grande largeur d'ouverture, de préférence ledit au moins un cliquet d'arrêt avec la plus grande largeur d'ouverture étant suivi à nouveau par au moins un cliquet d'arrêt (32) qui définit une plus petite largeur d'ouverture.

11. Procédé selon l'une quelconque des revendications précédentes, dans lequel la plus petite largeur d'ouverture étant choisie de telle sorte que le cliquet d'arrêt (26 ; 32) respectif pousse une graine de semis contre la voie de transport (110), et la plus grande largeur d'ouverture est choisie de telle sorte qu'une graine de semis peut glisser sans contact vers la voie de transport (110) sur le cliquet d'arrêt.

12. Procédé selon l'une quelconque des revendications précédentes, dans lequel la voie de transport (110) peut être actionnée par un système d'entraînement avec une vitesse d'actionnement variable, et il est prévu un dispositif de commande destiné à commander le système d'entraînement en fonction d'au moins un paramètre de service choisi dans le groupe contenant la vitesse de conduite, le type de graine, la qualité du sol, la distance entre les graines et la durée de transport des graines à travers le tuyau pour graines (20).

13. Procédé selon l'une quelconque des revendications précédentes, dans lequel sont prévus des moyens de détection (111), comportant de préférence des barrières lumineuses à l'entrée du tuyau pour graines (20) et à la sortie de l'unité de dépose (109), destinés à détecter la durée de transport d'une graine respective à travers le tuyau pour graines (20) et l'unité de dépose (109), et le dispositif de commande comporte un dispositif de réglage destiné à régler la vitesse d'entraînement de la voie de transport (110) en fonction de la durée de transport détectée.

14. Semoir, en particulier semoir monograine, comportant un réservoir de graines (100) central, auquel sont raccordés, via un répartiteur (112), une pluralité de tuyaux pour graines (20) qui relient le réservoir de graines (100) central à une pluralité d'unités de dépose (10), **caractérisé par** un dispositif destiné à déposer les graines selon l'une quelconque des revendications précédentes.

15. Semoir selon la revendication précédente, dans lequel est prévue une soufflerie permettant de transporter les graines par air comprimé à travers les tuyaux pour graines (20).
